Europäisches Patentamt

European Patent Office

Office européen des brevets

(19)

(11) **EP 1 177 638 B1**

(12) **EUROPÄISCHE PATENTSCHRIFT**

(45) Veröffentlichungstag und Bekanntmachung des Hinweises auf die Patenterteilung:
**04.08.2004  Patentblatt 2004/32**

(51) Int Cl.⁷: $H04B\ 1/40$, H04Q 7/30, H04B 7/26

(21) Anmeldenummer: **00940166.2**

(22) Anmeldetag: **09.05.2000**

(86) Internationale Anmeldenummer:
**PCT/DE2000/001447**

(87) Internationale Veröffentlichungsnummer:
**WO 2000/069087 (16.11.2000 Gazette 2000/46)**

(54) **EMPFÄNGERSCHALTUNG FÜR KOMMUNIKATIONSENDGERÄT UND VERFAHREN ZUR SIGNALVERARBEITUNG IN EINER EMPFÄNGERSCHALTUNG**

RECEIVER CIRCUIT FOR A COMMUNICATIONS TERMINAL AND METHOD FOR PROCESSING SIGNALS IN A RECEIVER CIRCUIT

CIRCUIT RECEPTEUR POUR TERMINAL DE COMMUNICATION ET PROCEDE DE TRAITEMENT DE SIGNAUX DANS UN CIRCUIT RECEPTEUR

(84) Benannte Vertragsstaaten:
**AT BE CH CY DE DK ES FI FR GB GR IE IT LI LU MC NL PT SE**

(30) Priorität: **10.05.1999  DE 19921444**

(43) Veröffentlichungstag der Anmeldung:
**06.02.2002  Patentblatt 2002/06**

(73) Patentinhaber: **Infineon Technologies AG 81669 München (DE)**

(72) Erfinder:
  • **DOETSCH, Markus 56072 Koblenz-Rübenach (DE)**
  • **JUNG, Peter 67697 Otterberg (DE)**
  • **PLECHINGER, Jörg 80469 München (DE)**
  • **SCHMIDT, Peter 67167 Erpolzheim (DE)**

(74) Vertreter: **Lange, Thomas, Dr. Patentanwälte Lambsdorff & Lange Dingolfinger Strasse 6 81673 München (DE)**

(56) Entgegenhaltungen:
**US-A- 5 490 172          US-A- 5 818 883**

  • **"SOFTWARE RADIOS" MICROWAVE JOURNAL,US,HORIZON HOUSE. DEDHAM, Bd. 39, Nr. 2, 1. Februar 1996 (1996-02-01), Seite 128,130,134,13 XP000580229 ISSN: 0192-6225**

EP 1 177 638 B1

**Beschreibung**

Die Erfindung betrifft eine Empfängerschaltung für ein Kommunikationsendgerät gemäß dem Oberbegriff des Anspruchs 1 sowie ein Verfahren zur Signalverarbeitung in einer Empfängerschaltung gemäß dem Oberbegriff des Anspruchs 12.

In heute üblichen Kommunikationsendgeräten, insbesondere in solchen, die für eine drahtlose Kommunikation vorgesehen sind, werden häufig mehrere (K) Empfangssignale parallel verarbeitet. Im Rahmen einer Signalvorverarbeitung werden die K Empfangssignale dabei zunächst in einen Zwischenfrequenzbereich oder ins Basisband heruntergemischt, dann unabhängig voneinander mittels K Analog-Digital-Umsetzern (A/D-Umsetzern) digitalisiert und nachfolgend - weiterhin unabhängig voneinander - K digitalen Filtern zugeführt, die eine digitale Bandbreitenbegrenzung zum Zwecke einer Kanalselektion durchführen.

Bei dieser Form der Signalvorverarbeitung ist nachteilig, daß aufgrund der vielfachen Verwendung identischer Komponenten ein beträchtlicher Realisierungsaufwand erforderlich ist.

In der U.S.-Patentschrift 5,852,477 ist ein digitaler Fernsehempfänger beschrieben, welcher zur Abstastung des empfangegen Signals z.B. 24 parallel geschaltete Analog/Digital-Umsetzer und ein diesen Umsetzern nachgeschaltetes digitales Entzerrerfilter verwendet. Die Umsetzer werden dabei zyklisch mit einer entsprechend verminderten Abtastrate betrieben, so dass sie der Reihe nach das empfangene Signal abtasten.

In der internationalen Patentanmeldung WO 91/07829 ist ein Mobilfunkempfänger mit mehreren Empfangsantennen beschrieben. Jeder Empfangsantenne sind zwei Analog/Digital-Umsetzer zur Wandlung der I- und Q-Komponenten des Empfangssignals und ein digitales Filter mit zwei Ausgängen für die gefilterten I-und Q-Komponenten zugeordnet.

Der Erfindung liegt die Aufgabe zugrunde, eine Empfängerschaltung für ein Kommunikationsendgerät zu schaffen, deren Realisierungsaufwand verhältnismäßig gering gehalten werden kann. Ferner zielt die Erfindung darauf ab, ein Verfahren zur Signalverarbeitung in einer Empfängerschaltung eines Kommunikationsendgerätes anzugeben, durch das der Realisierungsaufwand für die Empfängerschaltung verringert werden kann.

Zur Lösung der Aufgabe sind die Merkmale der Ansprüche 1 und 12 vorgesehen.

Die der Erfindung zugrundeliegende Idee besteht darin, ein digitales Filter zur Filterung mehrerer der von den A/D-Umsetzern ausgegebenen Digitalsignale zu nutzen. Dadurch kann die Anzahl der benötigten digitalen Filter reduziert werden, wodurch sowohl die Bauteil- als auch die Montagekosten der erfindungsgemäßen Empfängerschaltung gunstig beeinflußt werden.

Bei einer besonders bevorzugten Ausgestaltung der Erfindung ist N = 1, d.h. es wird insgesamt nur ein einziges digitales Filter zur Bandbreitenbegrenzung der K von den A/D-Umsetzern ausgegebenen Digitalsignale verwendet.

Nach einer bevorzugten ersten Ausführungsform der Erfindung umfaßt das Konversionsmittel einen Multiplexer. In dem vorstehend betrachteten Fall N = 1 werden die K Digitalsignale dann in ein einziges Eingangssignal für das digitale Filtermittel (bzw. das einzige digitale Filter desselben) gemultiplext. Die Verwendung eines Multiplexers ermöglicht somit den Einsatz eines digitalen Filtermittels mit nur einem Eingang.

Eine zweite, ebenfalls bevorzugte Ausfuhrungsform der Erfindung kennzeichnet sich dadurch, daß das Konversionsmittel mehrere, insbesondere K parallel geschaltete Nullen-Einfügeglieder umfaßt. Da bei der zweiten Ausführungsform kein Multiplexer benötigt wird, ist der Realisierungsaufwand sehr gering. Das Konversionsmittel weist bei dieser Ausführungsform K Ausgänge auf, so daß ein digitales Filtermittel mit K Eingangen erforderlich ist.

Die beiden vorstehend beschriebenen Ausführungsformen können miteinander kombiniert werden.

Es ist zu beachten, daß das Konversionsmittel insbesondere auch bei der zweiten Ausführungsform nicht als separates Bauelement vorliegen muß sondern in dem digitalen Filtermittel integriert und dort im Rahmen der Signalberechnung beispielsweise auch auf Softwareebene realisiert sein kann.

Ein digitales Filter des digitalen Filtermittels kann ein FIR- oder ein IIR-Filter sein. Mit zunehmender Ordnung L des digitalen Filters wird einerseits die erreichbare Filtersteilheit, andererseits jedoch auch der erforderliche Rechenaufwand erhöht. Vorzugsweise weist das bzw. die digitalen Filter eine Ordnung L zwischen 5 und 20, insbesondere zwischen 10 und 18 auf.

Üblicherweise wird im Signalweg hinter einem digitalen Filter eine Dezimation, d.h. eine Reduzierung der Abtastrate vorgenommen. Eine vorteilhafte Maßnahme besteht darin, das digitale Filter in diesem Fall aus einer Mehrzahl von in Reihe liegenden und alternierend angeordneten digitalen Einzelfiltern und Abtastraten-Reduzierschaltungen aufzubauen. Durch eine derartige Kaskadierung des digitalen Filters (bzw. bei N ≥ 2 der digitalen Filter) des Filtermittels kann der für die Filterung benötigte Rechenaufwand reduziert werden.

Die erfindungsgemäße Nutzung eines digitalen Filters zur Mehrsignalverarbeitung kann bereits in einer Empfängerschaltung mit nur einem Empfangssensor angewendet werden. In einer solchen Empfängerschaltung können nämlich durch Aufspaltung des von dem einen Empfangssensor ausgegebenen Sensorempfangssignals mehrere (K) Empfangssignale erzeugt werden, die dann nach dem erfindungsgemäßen Prinzip aufwandsgunstig weiterverarbeitet werden können.

Beispielsweise ist es bereits bekannt, in einem Mobilfunkempfänger eine Aufspaltung des Antennenempfangssignals in ein Inphase-Empfangssignal und ein 90° zu diesem phasenverschobenes Quadratur-Empfangssignal vorzunehmen. Das Inphasen- und das Quadratursignal können den gemäß der Erfindung weiterverarbeitet werden.

Eine andere vorteilhafte Ausgestaltung der Erfindung kennzeichnet sich dadurch, daß das Signal-Empfangsmittel mehrere Empfangssensoren enthält.

Mehrere Empfangssensoren in Form von mehreren Empfangsantennen werden beispielsweise bei Basisstationen für zellulare Mobilfunksysteme eingesetzt. Jeder Empfangssensor weist dort eine raumlich eingeschrankte Empfangscharakteristik auf, d.h. er kann Funksignale nur aus einem bestimmten Raumsegment entgegennehmen. Durch die mehreren Empfangssensoren wird eine den ganzen Raum erfassende Empfangscharakteristik geschaffen.

Aber auch bei Empfangssensoren ohne eine derartige Richtempfangscharakteristik kann es vorteilhaft sein, mehrere Empfangssensoren vorzusehen, und zwar deshalb, weil bei einer Mehrfachdetektion des gleichen Funksignals ein Informationsgewinn erzielbar ist, wodurch im Ergebnis eine Erhöhung der Störfestigkeit des Empfangers erreicht werden kann. Das Prinzip der Mehrfachdetektion kann sowohl in Basisstationen als auch in Mobilstationen von Mobilfunksystemen genutzt werden, und zwar durch Verwendung räumlich beabstandeter Doppeloder Mehrfachantennen.

Bei einer Mobilstation kann eine solche Doppelantenne beispielsweise durch die ubliche Stabantenne und eine als Planarantenne fest an der Gehäuserückseite angebrachte Zweitantenne ausgebildet sein. Eine andere Möglichkeit besteht darin, daß die Zweitantenne in Form einer zusätzlichen, optionalen, externen Antenne (Wurf- oder Fensterantenne) realisiert ist, die beispielsweise bei einem Gebrauch der Mobilstation in einem Kraftfahrzeug zum Einsatz kommen kann.

Empfangssensoren mit Richtempfangscharakteristik können natürlich ebenfalls in Form von Doppel- oder Mehrfachantennen realisiert sein.

Bei einer Gesamtanzahl von K Empfangssensoren kann jedem Empfangssensor genau ein A/D-Umsetzer zugeordnet sein. Ist gemäß der vorstehend beschriebenen Maßnahme eine Signalaufspaltung der von den Sensoren abgegebenen Signale vorgesehen (beispielsweise in den I- und den Q-Zweig), enthält das Signal-Empfangsmittel der erfindungsgemäßen Empfängerschaltung eine entsprechend geringere Anzahl von Empfangssensoren (beispielsweise K/2).

Weitere vorteilhafte Ausgestaltungen der Erfindung sind in den Unteranspruchen angegeben.

Die Erfindung wird nachfolgend anhand von zwei Ausführungsformen unter Bezugnahme auf die Zeichnung erlautert; in dieser zeigt:

Fig.1    ein Blockschaltbild eines Funkempfangers zur allgemeinen Erläuterung der Signalverarbeitung in demselben;

Fig. 2    ein Blockschaltbild einer Signalvorverarbeitungsschaltung mit K nachgeschalteten DSPs gemäß dem Stand der Technik;

Fig. 3    ein Blockschaltbild einer Signalvorverarbeitungsschaltung mit N nachgeschalteten DSPs gemäß der Erfindung;

Fig. 4    ein Blockschaltbild einer Signalvorverarbeitungsschaltung für N = 1 gemäß einer ersten Ausfuhrungsform der Erfindung; und

Fig. 5    ein Blockschaltbild einer Signalvorverarbeitungsschaltung für N = 1 gemäß einer zweiten Ausführungsform der Erfindung.

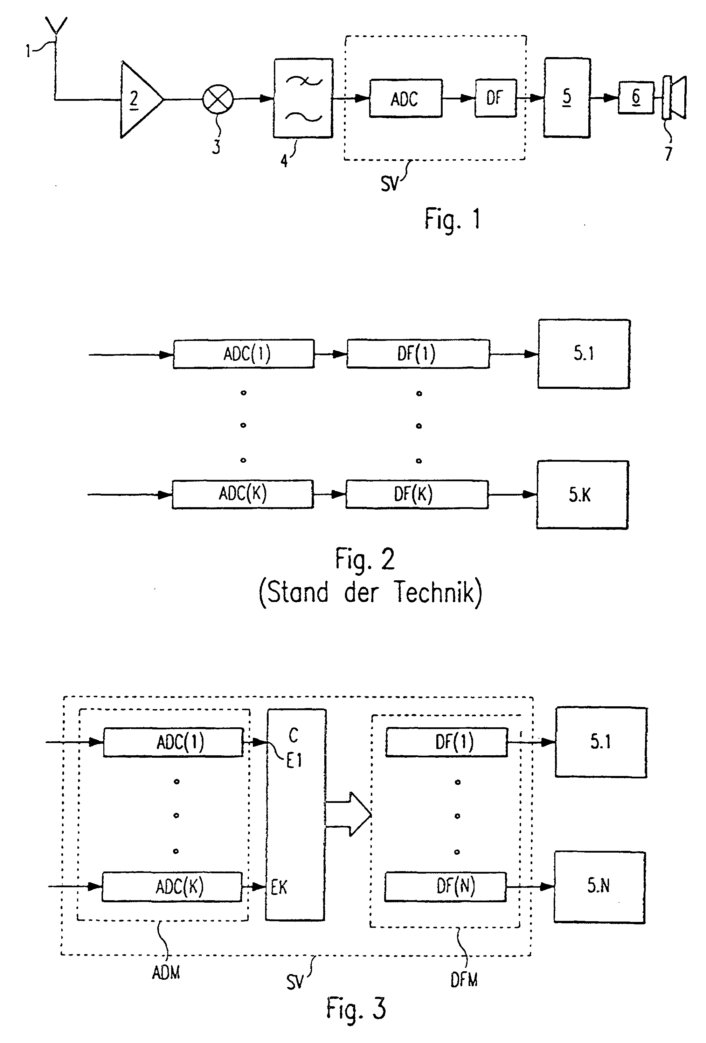

Fig.1 zeigt in schematischer Weise am Beispiel eines einzigen Kanals den Signalweg einer Empfängerschaltung eines Kommunikationsendgeräts. Ein Empfangssensor (Antenne) 1 nimmt ein Funksignal entgegen. Ein von dem Empfangssensor 1 ausgegebenes Sensorsignal wird in einem Verstärker 2 verstärkt und einer Mischstufe 3 zugeführt. In der Mischstufe 3 wird das verstärkte Sensorsignal in einen Zwischenfrequenzbereich oder ins Basisband heruntergemischt. Das heruntergemischte Signal wird einem analogen Tiefpaßfilter 4 zugeführt, der das Signal auf eine Bandbreite B begrenzt. Das von dem analogen Tiefpaßfilter 4 ausgegebene Signal wird einer Signalvorverarbeitungsschaltung SV eingegeben, deren Umfang in Fig. 1 durch ein mit gestrichelten Linien gezeichnetes Rechteck dargestellt ist.

Die Signalvorverarbeitungsschaltung SV umfaßt eingangsseitig einen A/D-Umsetzer ADC, der das von dem analogen Tiefpaßfilter 4 ausgegebene bandbreitenbegrenzte Signal abtastet.

Die Abtastung erfolgt mit einer Abtastfrequenz f, die die Nyquistbedingung ($f \geq 2B$) erfüllt, wobei zur Erzielung einer hohen Genauigkeit gegebenenfalls eine Uberabtastung durchgeführt wird. In der Regel wird mehr als ein wertdiskreter Abtastwert pro empfangenem Datensymbol erzeugt, d.h. $f > 1/T_s$, wobei $T_s$ die Symbolzeitdauer ist.

Im Falle von bandspreizenden Nachrichtenubertragungssystemen, beispielsweise Systemen mit Codemultiplex (CDMA: Code Division Multiple Access) oder Radarsystemen, wird eine Abtastrate verwendet, bei der mehr als ein Abtastwert pro Chip, d.h. $f > 1/T_c$ erzeugt wird. $T_c$ bezeichnet dabei die Chipzeitdauer, die kleiner als die Symbolzeitdauer ist, da bei bandspreizenden Systemen jedes Symbol mit einer systemstandardabhängig vorgegebenen Anzahl von Chips gespreizt wird.

Das von dem A/D-Umsetzer ADC ausgegebene Digitalsignal wird einem digitalen Filter DF zugeführt. Das digitale Filter führt eine Kanalselektion durch, an die sich eine Dezimation (d.h. eine Reduzierung der Abtastrate) anschließen kann. Die Dezimation dient dazu, den Rechenaufwand bei der weiteren Signalbearbeitung zu begrenzen.

Die weitere Signalbearbeitung kann mittels eines DSPs 5 durchgeführt werden. Der DSP 5 nimmt das gefilterte Digitalsignal entgegen und führt weitere Signalverarbeitungsschritte wie beispielsweise ein Spreizdecodierung, eine adaptive Datendetektion, eine Blockentschachtelung, eine Kanaldecodierung und eine Quellendecodierung durch.

Ein am Ausgang des DSPs 5 bereitstehendes Ausgabesignal wird nach einer D/A-Umsetzung (nicht dargestellt) in einem Endverstärker 6 verstarkt und einem geeigneten Ausgabemittel 7, beispielsweise einem Lautsprecher (oder einem LCD-Bildschirm oder ähnlichem) zugeführt.

Fig. 2 zeigt ein Blockschaltbild einer K-kanaligen Signalvorverarbeitungsschaltung gemäß dem Stand der Technik.

Die Signalvorverarbeitungsschaltung umfaßt K parallele Gruppen ADC(1), DF(1); ADC(2), DF(2); ...; ADC(K), DF(K), die jeweils aus einem ADC und einem DF gemaß Fig. 1 bestehen. Die von den digitalen Filtern DF(1), ..., DF(K) ausgegebenen Signale werden gemäß Fig. 1 einer Signalweiterbearbeitung in K DSPs 5.1, ..., 5.K unterzogen.

Das in Fig. 3 dargestellte Blockschaltbild verdeutlicht den Aufbau einer erfindungsgemäßen Signalverarbeitungsschaltung SV.

Diese weist K Eingange auf, die jeweils einem A/D-Umsetzer ADC(1), ..., ADC(K) zugeordnet sind. Die Eingänge werden von einem Signal-Empfangsmittel (nicht dargestellt) gespeist. Dieses kann in vielfältiger Weise realisiert sein. Es kann beispielsweise K parallel zueinander liegende Signalwege der Komponenten 1, 2, 3, 4 gemäß Fig. 1 umfassen. Es ist auch moglich, daß lediglich K/2 Empfangssensoren (Antennen) 1 vorgesehen sind und durch Signalaufspaltung in die I- und Q-Zweige jeweils zwei Empfangssignale pro Empfangssensor 1 für die Signalvorverarbeitungsschaltung SV generiert werden.

Im Falle eines Kommunikationsendgerats für die drahtgebundene Kommunikation kann das Signal-Empfangsmittel anstelle der Komponenten 1, 2, 3, 4 andere in der Technik bekannte Realisierungsformen aufweisen.

Die A/D-Umsetzer ADC(1), ..., ADC(K) führen unabhängig voneinander eine Abtastung der K Sensorempfangssignale gemäß der Beschreibung zu Fig. 1 durch. Insbesondere wird dabei eine ausreichend hohe Abtastrate eingesetzt.

Die digitalen Ausgangssignale der A/D-Umsetzer ADC(1), ..., ADC(K) werden K Eingängen E1, ..., EK eines Konversionsmittels C zugeführt.

Im Signalweg hinter dem Konversionsmittel C befindet sich ein digitales Filtermittel DFM, das aus einer Anzahl von N parallel liegenden, voneinander unabhängigen digitalen Filtern DF(1), ..., DF(N) besteht. Das digitale Filtermittel DFM weist somit in seiner allgemeinen Realisierung N Ausgange auf.

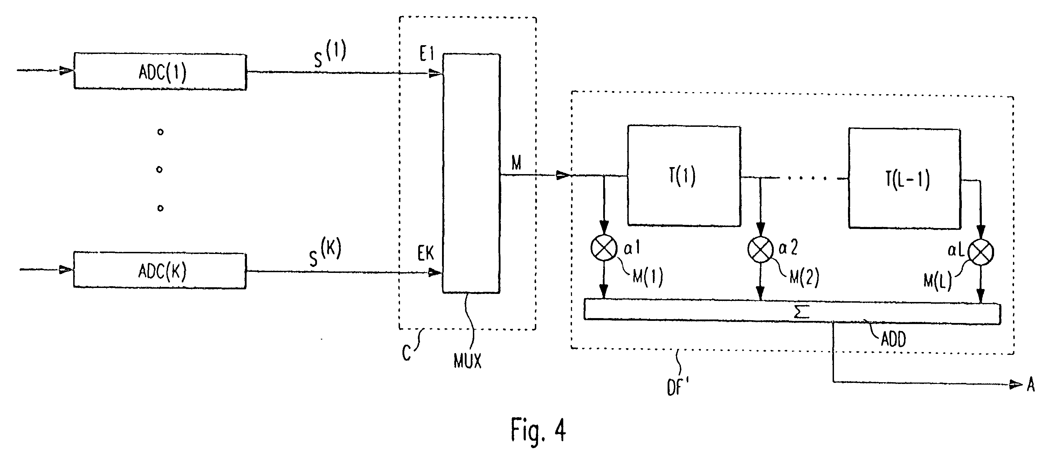

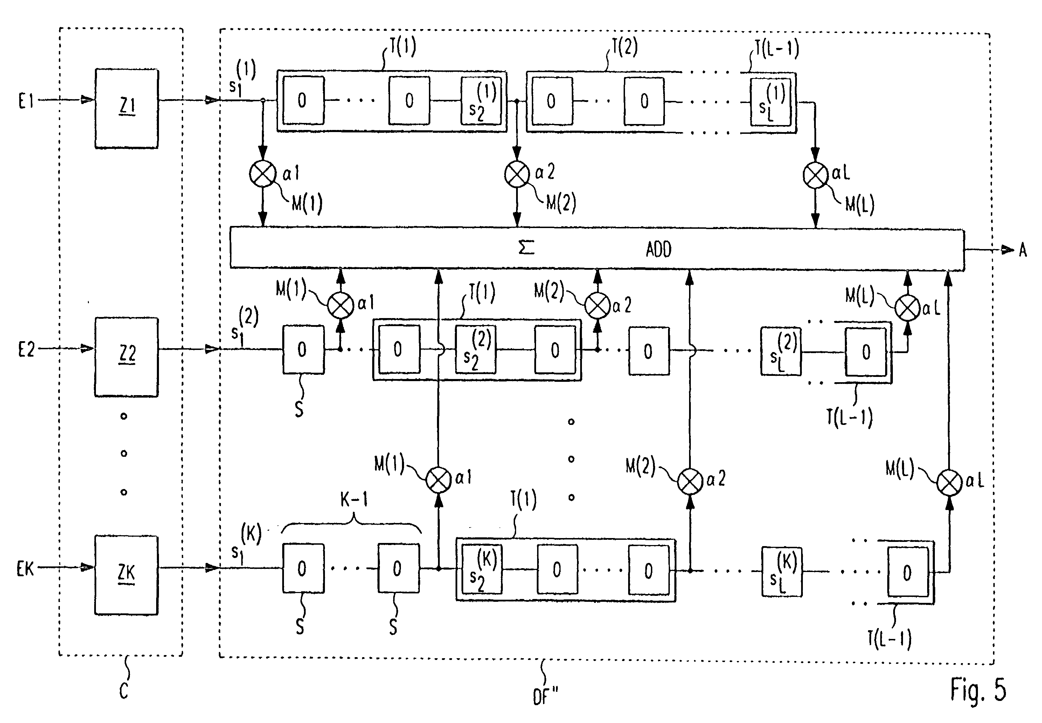

Es gilt N < K. Das Konversionsmittel C hat die Aufgabe, eine diese Bedingung ermöglichende Verarbeitung der von den A/D-Umsetzern ADC(1), ..., ADC(K) gelieferten Digitalsignale durchzuführen, wobei anhand der Fig. 4 und 5 zwei diesbezügliche Realisierungsmöglichkeiten erlautert werden.

Die N Ausgangssignale des digitalen Filtermittels DFM werden N einzelnen DSPs 5.1, ..., 5.N zugeführt und dann einer weiteren Signalverarbeitung gemaß Fig. 1 unterzogen.

Die Fig. 4 und 5 zeigen zwei praktische Ausführungsformen der Signalverarbeitungsschaltung SV für den Fall N = 1. Bei N = 1 weist das digitale Filtermittel DFM nur ein digitales Filter DF(1) mit einem Filterausgang auf, das im folgenden mit DF' bezeichnet wird.

Nach Fig. 4 stehen am Ausgang der A/D-Umsetzer ADC(1), ..., ADC(K) jeweils die als Bit-Vektoren darstellbaren Digitalsignale $S^{(1)} = (S^{(1)}_1, ..., S^{(1)}_P), ..., S^{(K)} = (S^{(K)}_1, ..., S^{(K)}_P)$ zur Verfügung. Jeder der Vektoren $S^{(1)}, ..., S^{(K)}$ hat P Komponenten (Bits).

Die Digitalsignale werden den zugehörigen Eingangen E1, ..., EK des Konversionsmittels C zugeführt, d.h. $S^{(1)}$ wird dem Eingang E1 zugeführt, $S^{(2)}$ wird dem Eingang E2 zugeführt und ... $S^{(K)}$ wird dem Eingang EK zugeführt.

Das Konversionsmittel C ist durch einen Multiplexer MUX realisiert. Am Ausgang des Multiplexers MUX ergibt sich der P·K-komponentige Vektor

$$M = (S^{(1)}_1, S^{(2)}_1, ..., S^{(K)}_1; ...; S^{(1)}_P, S^{(2)}_P, ..., S^{(K)}_P)$$

Das Ausgangssignal des Multiplexers MUX wird dem digitalen Filtermittel zugeführt, das wie bereits erwähnt aus einem einzigen digitalen Filter DF' besteht. Das digitale Filter DF' besitzt die Ordnung L. Es umfaßt somit L Multiplizierer M(1), M(2), ..., M(L) mit zugeordneten Filterkoeffizienten $\alpha 1, \alpha 2, ..., \alpha L$ sowie eine Anzahl von (L-1) Schieberegistern T(1), ..., T(L-1). Jedes Schieberegister weist K Speicherplätze auf und verzogert das multiplexierte Signal daher um K Systemtakte.

Die Ausgänge der Multiplizierer M(1), M(2), ..., M(L) werden einem Addierer ADD zugeführt, der das Ausgangssignal A des digitalen Filters DF' erzeugt.

Ein Filterkoeffizientensatz $(\alpha 1, \alpha 2, ..., \alpha L)$ definiert die Durchlaßbandbreite des digitalen Filters DF'. Das digitale Filter DF' kann durch Austausch des Koeffizientensatzes als ein von außen konfigurierbares Filter ausgelegt sein.

Fig. 5 zeigt eine weitere Realisierungsmöglichkeit des Konversionsmittels C und des digitalen Filtermittels DFM. Auch hier ist N = 1, d.h. das digitale Filtermittel DFM ist durch ein einziges digitales Filter DF'' gebildet.

An den Eingangen E1, E2, ..., EK des Konversionsmittels C liegen wiederum die Digitalsignale der A/D-Umsetzer ADC(1), ..., ADC(K) an. Das Konversionsmittel C weist hier K parallele, unabhängige Nullen-Einfügeglieder Z1, Z2, ..., ZK auf. Jedes Nullen-Einfügeglied Z1, Z2, ..., ZK fugt nach jedem Abtastwert des eingangsseitig einlaufenden Digitalsignals eine Anzahl von (K-1) Nullen ein und erhöht damit die Abtastrate auf das K-fache der Abtastrate der (nicht dargestellten) A/D-Umsetzer ADC(1), ..., ADC (K).

Die K Ausgänge des Konversionsmittels C werden K Eingängen des digitalen Filters DF" zugeführt.

In dem Signalweg des von dem ersten Nullen-Einfugeglied Z1 ausgegebenen Signals sind L-1 Schieberegister T(1), T(2), ..., T(L-1) in Reihe angeordnet. Jedes Schieberegister weist K Speicherplatze auf.

Ferner sind L Multiplizierer M(1), M(2), ..., M(L) vorgesehen, die den betrachteten Signalweg an der Stelle vor dem ersten Schieberegister T(1), an sämtlichen Stellen zwischen den genannten Schieberegistern T(1), ..., T(L-1) und am Ausgang des letzten Schieberegisters T(L-1) abgreifen. Den Multiplizierern M(1), M(2), ..., M(L) sind wiederum Filterkoeffizienten $\alpha 1$, $\alpha 2$, ..., $\alpha L$ zugeordnet. Die Ausgänge der Multiplizierer M(1), M(2), ..., M(L) werden einem Addierer ADD eingegeben.

Der dem zweiten Eingang des digitalen Filters DF" zugeordnete Signalweg unterscheidet sich von dem vorstehend beschriebenen ersten Signalweg konstruktiv lediglich dadurch, daß vor dem ersten Schieberegister T(1) ein einzelner, zusätzlicher Speicherplatz S vorgesehen ist.

Bei dem dem dritten Eingang des digitalen Filters DF" zugeordneten Signalweg (nicht dargestellt) sind vor dem ersten Schieberegister bereits zwei zusätzliche Speicherplätze angeordnet; diese Struktur setzt sich bezuglich der weiteren Eingänge fort, demzufolge im K-ten Signalweg (K-1) zusätzliche Speicherplätze S vor dem ersten Schieberegister T(1) angeordnet sind.

Fig. 5 zeigt anhand der Vektoren $S^{(1)}$ bis $S^{(K)}$ eine Momentaufnahme der Speicherplatzzustände. Bezüglich des ersten Signalwegs liegt das Bit $s^{(1)}_1$ am Eingang des ersten Schieberegisters T(1) sowie an dem Eingang des ersten Multiplizierers M(1) an. Die ersten (K-1) Speicherplätze des ersten Schieberegisters T(1) weisen den Zustand 0 auf. Der letzte Speicherplatz von T(1) speichert den Wert des Bits $s^{(1)}_2$.

Eine Speicherplatzbelegung nach diesem Muscer wiederholt sich für die restlichen Schieberegister T(2) bis T(L-1) im ersten Signalweg. Der letzte Speicherplatz des Schieberegisters T(L-1) speichert den Wert des Bits $s^{(1)}_1$.

Insgesamt weist der erste Signalweg eine Anzahl von K(L-1) Speicherplätzen auf.

Die Zustände der einzelnen Speicherplätze in den zweiten bis K-ten Signalwegen (bezüglich der Vektoren $S^{(2)}$ bis $S^{(K)}$) sind ebenfalls in Fig. 5 angegeben.

Es wird deutlich, daß das digitale Filter DF" insgesamt K{K(L-1)+0,5(K-1)} Speicherplätze aufweist.

Das Ausgangssignal A des digitalen Filters DF" wird von dem Addierer ADD erzeugt. Die weitere Signalbearbeitung kann gemäß Fig. 1 erfolgen.

Die in den Fig. 4 und 5 dargestellten digitalen Filter DF', DF" können in Kaskadenbauweise realisiert sein. Dies hat den Vorteil, daß zwischen den einzelnen Filtern der Filterkaskade Abtastraten-Reduzierschaltungen eingesetzt werden können, die in Richtung des Signalwegs eine sukzessive Verringerung des Rechenaufwands in den einzelnen Filtern gestatten.

Die in den Fig. 4 und 5 gezeigten Strukturen repräsentieren letztendlich eine Rechenvorschrift, nach der die von den A/D-Umsetzern ADC(1), ..., ADC(K) ausgegebenen Digitalsignale zu verarbeiten sind. Die Signalverarbeitungsschaltung SV kann daher im Gesamten oder abschnittsweise (beispielsweise nur bezüglich des digitalen Filtermittels DF' bzw. DF") auch durch einen programmierbaren Signalprozessor realisiert sein, der nach einem diese Rechenvorschrift umsetzenden Algorithmus arbeitet.

**Patentansprüche**

1. Schaltung eines Kommunikationsendgerätes zur Digitalisierung und Filterung von K verschiedenen, analogen Empfangssignalen, wobei K > 1 ist, mit

   - einem Analog/Digital-Umsetzermittel (ADM) mit K parallel geschalteten Analog/Digital-Umsetzern (ADC(1), ..., ADC(K)),
   - einem Multiplexer (MUX) zum Multiplexen der K digitalisierten Signale, und
   - einer digitalen Filterschaltung (DF') zum Filtern der K gemultiplexten Signale, wobei die digitale Filterschaltung (DF') Speicherelemente aufweist, die jeweils aus Schieberegistern (T(1), ..., T(L-1)) der Länge K bestehen.

2. Schaltung eines Kommunikationsendgerätes zur Digitalisierung und Filterung von K verschiedenen, analogen Empfangssignalen, wobei K > 1 ist, mit

   - einem Analog/Digital-Umsetzermittel (ADM) mit K parallel geschalteten Analog/Digital-Umsetzern (ADC(1), ..., ADC(K)),
   - einer K Nullen-Einfügeglieder (Z1, Z2, ..., ZK) umfassenden Stufe (C), wobei jedes Nullen-Einfügeglied ein digitalisiertes Signal entgegennimmt und nach einem Abtastwert des digitalisierten Signals K-1 Nullen in das digitalisierte Signal einfügt, und
   - einer digitalen Filterschaltung (DF") zum Verarbeiten der mit den eingefügten Nullen versehenen Signale, wobei die digitale Filterschaltung (DF") Speicherelementeaufweist, die jeweils aus Schieberegistern (T1, ..., T(L-1)) der Länge K bestehen.

3. Schaltung nach Anspruch 1 und 2,
**dadurch gekennzeichnet,**

   - **daß** die Schaltung sowohl eine Schaltung nach Anspruch 1 als auch eine Schaltung nach Anspruch 2 umfasst.

4. Schaltung nach einem der vorhergehenden Ansprüche,
**dadurch gekennzeichnet,**

   - **daß** die digitale Filterschaltung (DF(1), ..., DF(N); DF', DF") eine Ordnung L zwischen 5 und 20, insbesondere zwischen 10 und 18, aufweist.

5. Schaltung nach einem der vorhergehenden Ansprüche,
**dadurch gekennzeichnet,**

   - **daß** die digitale Filterschaltung (DF(1), ..., DF(N); DF', DF") aus einer Mehrzahl von in Reihe liegenden und alternierend angeordneten digitalen Einzelfilterschaltungen und Abtastraten-Reduzierschaltungen aufgebaut ist.

6. Schaltung nach einem der vorhergehenden Ansprüche,
**gekennzeichnet durch**

   - ein Signal-Empfangsmittel (1, 2, 3, 4), das einen einzigen Empfangssensor (1) enthält, welcher ein einziges Sensorempfangssignal abgibt, wobei
   - die den K Analog/Digital-Umsetzern (ADC(1), ..., ADC (K)) zugeführten K Empfangssignale **durch** eine Signalaufspaltung, insbesondere **durch** eine Signalaufspaltung in ein Inphaseund Quadratur-Empfangssignal, des Sensorempfangssignals erzeugt werden.

7. Schaltung nach einem der Ansprüche 1 bis 5,
**gekennzeichnet durch**

   - ein Signal-Empfangsmittel (1, 2, 3, 4), das mehrere, insbesondere K oder K/2 Empfangssensoren (1) enthält.

8. Schaltung nach Anspruch 7,
**dadurch gekennzeichnet,**

   - **daß** die Empfangssensoren (1) jeweils eine Richtempfangscharakteristik zur Erfassung von Funksignalen in einem definiert vorgebbaren Raumsegment besitzen.

9. Mobilstation eines Mobilfunksystems, enthaltend eine Schaltung nach einem der vorhergehenden Ansprüche.

10. Basisstation eines Mobilfunksystems, enthaltend eine Schaltung nach einem der vorhergehenden Ansprüche.

11. Verfahren zur Digitalisierung und Filterung von K verschiedenen, analogen Empfangssignalen, wobei K > 1 ist, bei dem

   - ein Analog/Digital-Umsetzermittel (ADM) K analoge Empfangssignale mittels K parallel geschalteter Analog/Digital-Umsetzer (ADC(1), ..., ADC(K)) digitalisiert,
   - ein Multiplexer (MUX) die K digitalisierten Signale multiplext, und
   - eine digitale Filterschaltung (DF') die K gemultiplexten Signale filtert, wobei Speicherelemente der digitalen Filterschaltung (DF') jeweils aus Schieberegistern (T(1), ..., T(L-1)) der Länge K bestehen.

12. Verfahren zur Digitalisierung und Filterung von K verschiedenen, analogen Empfangssignalen, wobei K > 1 ist, bei dem

   - ein Analog/Digital-Umsetzermittel (ADM) K analoge Empfangssignale mittels K parallel geschalteter Analog/Digital-Umsetzer (ADC(1), ..., ADC(K)) digitalisiert,
   - in jedes digitalisierte Signal nach einem Abtastwert K-1 Nullen eingefügt werden, und
   - eine digitale Filterschaltung (DF") die K digitalisierten und mit eingefügten Nullen versehenen Signale filtert, wobei Speicherelemente der digitalen Filterschaltung (DF") jeweils Schieberegister (T(1), ..., T(L-1)) der Länge K aufweisen.

**Claims**

1. Circuit for a communications terminal for digitization and filtering of K different, analogue received signals, where K > 1, having

   - an analogue/digital converter means (ADM) with K analogue/digital converters (ADC(1), ..., ADC(K), connected in parallel
   - a multiplexer (MUX) for multiplexing the K digitized signals, and
   - a digital filter circuit (DF') for filtering the K multiplexed signals, with the digital filter circuit (DF') having memory elements which each comprise shift registers (T(1), ..., T(L-1)) of length K.

2. Circuit for a communications terminal for digitization and filtering of K different, analogue received signals, where K > 1, having

   - an analogue/digital converter means (ADM) with K analogue/digital converters (ADC(1), ..., ADC(K), connected in parallel
   - a state (C) which comprises K zero-inserting elements (Z1, Z2, ..., ZK), with each zero-inserting element receiving a digitized signal and inserting K-1 zeros into the digitized signal after a sample value of the digitized signal, and
   - a digital filter circuit (DF'') for processing the signals which are provided with the inserted zeros, with the digital filter circuit (DF'') having memory elements which each comprise shift registers (T1, ..., T(L-1)) of length K.

3. Circuit according to Claim 1 and 2 **characterized**

   - **in that** the circuit has both a circuit according to Claim 1 and a circuit according to Claim 2.

4. Circuit according to one of the preceding claims, **characterized**

   - **in that** the digital filter circuit (DF(1), ..., DF(N); DF', DF'') is of an order of magnitude L between 5 and 20, in particular between 10 and 18.

5. Circuit according to one of the preceding claims, **characterized**

   - **in that** the digital filter circuit (DF(1), ..., DF(N); DF', DF'') is constructed from a multiplicity of digital individual filter circuits and sampling rate reduction circuits which are located in series and arranged in alternating fashion.

6. Circuit according to one of the preceding claims, **characterized by**

   - a signal-receiving means (1, 2, 3, 4) which contains a single reception sensor (1) which outputs a single sensor received signal,
   - with the K received signals fed to the K analogue/digital converters (ADC(1), ..., ADC(K)) being generated by signal splitting, in particular by signal splitting into an in-phase received signal and a quadrature received signal, of the sensor received signal.

7. Circuit according to one of Claims 1 to 5, **characterized by**

   - a signal-receiving means (1, 2, 3, 4) which contains a plurality of, in particular K or K/2, reception sensors (1).

8. Circuit according to Claim 7, **characterized**

   - **in that** the reception sensors (1) each have a directional reception characteristic for sensing radio signals in a spatial segment which can be predefined in a definite fashion.

9. Mobile station of a mobile radio system, containing a circuit according to one of the preceding claims.

10. Base station of a mobile radio station, containing a circuit according to one of the preceding claims.

11. Method for digitization and filtering of K different, analogue received signals, where K > 1, in which

   - an analogue/digital converter means (ADM) digitizes K analogue received signals by means of K parallel-connected analogue/digital converters (ADC(1), ..., ADC(K)),
   - a multiplexer (MUX) multiplexes the K digitized signals, and
   - a digital filter circuit (DF') filters the K multiplexed signals, with memory elements in the digital filter circuit (DF') each comprising shift registers (T(1), ..., T(L-2)) of length K.

12. Method for digitization and filtering of K different, analogue received signals, where K > 1, in which

   - an analogue/digital converter means (ADM) digitizes K analogue received signals by means of K parallel-connected analogue/digital converters (ADC(1), ..., ADC(K)),
   - K-1 zeros are inserted into each digitized signal after a sample value, and
   - a digital filter circuit (DF'') filters the K digitized signals, which are provided with inserted zeros, with memory elements in the digital filter circuit (DF'') each having shift registers (T(1), ..., T(L-1)) of length K.

**Revendications**

1. Circuit d'un terminal de communication pour numériser et filtrer K signaux de réception analogiques différents, K étant supérieur à 1, comprenant

   - un moyen (ADM) formant convertisseur analogique/numérique ayant K convertisseurs (ADC (1), ..., ADC(K)) analogiques/numériques montés en parallèle,
   - un multiplexeur (MUX) pour multiplexer les K signaux numérisés, et
   - un circuit (DF') de filtrage numérique pour filtrer les K signaux multiplexés, le circuit (DF') de filtrage numérique comportant des éléments de mémoire qui sont constitués respectivement de registres (T(1), ..., T(L-1)) à décalage de longueur K.

2. Circuit d'un terminal de communication pour numériser et filtrer K signaux de réception analogiques différents, K étant supérieur à 1, comprenant

- un moyen (ADM) formant convertisseur analogique/numérique ayant K convertisseurs (ADC (1), ..., ADC(K)) analogiques/numériques montés en parallèle,
- un étage (C) comprenant K éléments (Z1, Z2, ..., ZK) d'insertion de zéros, chaque élément d'insertion de zéros recevant un signal numérisé et insérant, suivant une valeur d'échantillonnage du signal numérisé, K-1 zéros dans le signal numérisé, et
- un circuit (DF") de filtrage numérique pour traiter les signaux munis des zéros insérés, le circuit (DF") de filtrage numérique comportant des éléments de mémoire qui sont constitués respectivement de registres (T1, ..., T(L-1)) à décalage.

3. Circuit suivant la revendication 1 et 2, **caractérisé**

- **en ce que** le circuit comprend à la fois un circuit suivant la revendication 1 et un circuit suivant la revendication 2.

4. Circuit suivant l'une des revendications précédentes, **caractérisé**

- **en ce que** le circuit (DF(1), ..., DF(N) ; DF', DF") de filtrage numérique a un ordre L compris entre 5 et 20, notamment entre 10 et 18.

5. Circuit suivant l'une des revendications précédentes, **caractérisé**

- **en ce que** le circuit (DF(1), ...., DF(N) ; DF', DF") de filtrage numérique est constitué d'une multiplicité de circuits individuels de filtrage numériques montés en série et disposés en alternance et de circuits réducteurs de la cadence d'échantillonnage.

6. Circuit suivant l'une des revendications précédentes, **caractérisé par**

- un moyen (1, 2, 3, 4) de réception du signal qui comporte un capteur (1) unique de réception, lequel émet un signal unique de réception de capteur, dans lequel
- les K signaux de réception envoyés aux K convertisseurs (ADC(1), ..., ADC(K)) analogiques/numériques sont produits par une division du signal, notamment par une division du signal de réception du capteur, notamment par une division du signal en un signal de réception en phase et en un signal de réception en quadrature.

7. Circuit suivant l'une des revendications 1 à 5, **caractérisé par**

- un moyen (1, 2, 3, 4) de réception du signal qui comporte plusieurs, notamment K ou K/2, capteurs (1) de réception.

8. Circuit suivant la revendication 7, **caractérisé**

- **en ce que** les capteurs (1) de réception ont respectivement une caractéristique de réception directionnelle de détection de signaux radio dans un segment d'espace pouvant être prescrit d'une manière définie.

9. Station mobile d'un système de radiotéléphonie mobile, comportant un circuit suivant l'une des revendications précédentes.

10. Station de base d'un système de radiotéléphonie mobile, comportant un circuit suivant l'une des revendications précédentes.

11. Procédé de numération et de filtration de K signaux de réception analogiques différents, K étant supérieur à 1, dans lequel

- un moyen (ADM) formant convertisseur analogique/numérique numérise K signaux de réception analogiques au moyen de K convertisseurs (ADC(1), ..., ADC(K)) analogiques/numériques montés en parallèle,
- un multiplexeur (MUX) multiplexe les K signaux numérisés, et
- un circuit (DF') de filtrage numérique filtre les K signaux multiplexés, des éléments de mémoire du circuit (DF') de filtrage numérique étant constitués respectivement de registres (T (1), ..., T(L-1)) à décalage de longueur K.

12. Procédé de numération et de filtration de K signaux de réception analogiques différents, K étant supérieur à 1, dans lequel

- un moyen (ADM) formant convertisseur analogique/numérique numérise K signaux de réception analogiques au moyen de K convertisseurs (ADC(1), ..., ADC(K)) analogiques/numériques montés en parallèle,
- K-1 zéros étant inséré dans chaque signal numérisé suivant une valeur d'échantillonnage, et

**EP 1 177 638 B1**

- un circuit (DF") de filtrage numérisé filtrant les K signaux numérisés et muni des zéros insérés, des éléments de mémoire du circuit (DF") de filtrage numérisé ayant respectivement des registres (T(1), ..., T(L-1)) à décalage de longueur K.

Fig. 1

Fig. 2
(Stand der Technik)

Fig. 3

Fig. 4

EP 1 177 638 B1

$s_1^{(1)}$

T(1)  T(2)  T(L-1)

| 0 | ... | 0 | $s_2^{(1)}$ |  | 0 | ... | 0 | ... | $s_L^{(1)}$ |

E1  Z1

$\otimes$ α1   $\otimes$ α2   $\otimes$ αL

M(1)  M(2)  M(L)

Σ   ADD   A

M(1)  $\otimes$ α1   T(1)   M(2)  $\otimes$ α2   M(L)  $\otimes$ αL

$s_1^{(2)}$

E2  Z2

| 0 | ... | 0 | $s_2^{(2)}$ | 0 | ... | 0 | ... | $s_L^{(2)}$ | ... | 0 |

S   T(L-1)

M(1)  $\otimes$ α1   M(2)  $\otimes$ α2   M(L)  $\otimes$ αL

K-1   T(1)

$s_1^{(K)}$

EK  ZK

| 0 | ... | 0 | $s_2^{(K)}$ | 0 | ... | 0 | $s_L^{(K)}$ | ... | 0 |

S   S   T(L-1)

C   DF"

Fig. 5